# EUROPEAN PATENT APPLICATION

(11) **EP 0 639 535 A1**
(43) Date of publication of application: **22.02.1995**
(21) Application number: 94306055.8
(22) Date of filing: 17.08.1994
(51) Int. Cl.: C02F 3/06, C02F 3/20, C02F 3/22

(54) **Effluent treatment**

(30) Priority: 19.08.1993 GB 9317306
(71) Applicant: Copa Products Ltd., Falmouth, Cornwall TR11 4SN (GB)
(72) Inventor: Froud, David Peter, Copa Products Ltd., Marden Tonbridge, Kent TN12 9QJ (GB); Collett, Peter, South West Water Plc., Exeter, Devon, EX2 7HR (GB)
(74) Representative: Lewin, John Harvey

(57) **Abstract**

The invention provides a biological aerated filter comprising an upstanding hollow column (10), the column being packed with support media (14) for microbial biomass, and a portion of the interior of the column at the lower end (12) being free of support media and housing an air diffuser (15), whereby in use liquid effluent is contained in the column and surrounds microbial biomass on the support matrix, and air is diffused through the effluent by the air diffuser.

## Description

This invention relates to treatment of effluent such as sewage, and more particularly to apparatus and a process for improving the quality of effluent from a sewage treatment works.

In a conventional sewage treatment plant, crude sewage is first screened to remove grit and other hard solids. It is then passed to a primary sedimentation tank where suspended solids are allowed to gradually settle and are removed in the form of a liquid raw sludge. The raw sludge is passed to a sludge digestion plant and the digested sludge is subsequently dried. Effluent from the primary tank is subjected to secondary treatment. A commonly used form of secondary treatment is a so called "biological filter". This is not a filter as such, but is a tank containing solid media providing a large surface area on which colonies of microorganisms (generally aerobic microorganisms) form a biomass and are exposed to the liquid effluent and to the surrounding air. These microorganisms break down noxious substances in the effluent. Filter effluent from the biological filter is passed to a humus tank where settlement again is allowed to take place. Settled sludge from the humus tank is returned to the primary sedimentation tank. Effluent from the humus tank is discharged to a water course. Such basic processes are described in "An Introduction to Sewage Treatment", published by the Institute of Water Pollution Control, 1987.

A common problem for existing sewage treatment works is that they have become overloaded with the increase in population being served by the works. They have very little land available for expansion, and in any case the engineering works needed for providing additional tanks is very expensive.

Another problem faced by sewage treatment plants is the variability of the incoming crude sewage. The volume and concentration of incoming crude sewage can vary depending on weather conditions and seasonal variations. For example, in holiday resorts, it is desirable to be able to provide increased capacity for sewage works to cope with seasonal increases in the load, without the need for expensive civil engineering work to increase the hydraulic and biological capacity of the works. It is also desirable that the additional capacity required to cope with seasonal load variations can be brought up to operational efficiency quickly.

Biological aerated filters have been developed to provide improved biological filters. A biological aerated filter is a biological filter including means for introducing additional air into the effluent under treatment. In present designs, a tank is packed with a self-supporting matrix, for example corrugated layers of plastics material, such as rigid PVC, which acts as support for microbial biomass. Alternatively, it may contain random fill media with a large surface area, which can be plastic mouldings or mineral chips. The solid matrix is contained in a treatment tank, so that it is submerged in liquid effluent to be treated, and air diffusers are provided beneath the solid matrix, to enable a constant stream of air bubbles to be blown through the effluent in and around the solid media.

Although such biological aerated filters can be constructed as moveable modular units, they are quite expensive to construct and not easily moveable. Furthermore, the degree of aeration of the solid media may not be sufficient in regions which are not immediately above the air diffusers. The performance from existing designs is hampered by the physical constraints of the depth of the biological filter, the difficulty of servicing filters in deep tanks or shafts, and the inability to use air for biological degradation efficiently because of wastage due to the need to achieve scouring velocities with the air effluent mix. The stream of air bubbles from the air diffusers sometimes does not reach all parts of the solid matrix, with the result that some of the microorganisms may be provided with reduced air, and hence are less effective. Although the filter can be made in modular form, it is still rather cumbersome to move, and also maintenance (eg access to the air diffusers) is not always very convenient.

The present invention overcomes these problems by the use of a biological aerated filter in a commercially available tube which may have accessories fitted to convert it into a self-contained biological aerated column.

In accordance with the invention, there is provided a biological aerated filter comprising an upstanding hollow column, the column being packed with support media for microbial biomass, and a portion of the interior of the column at the lower end being free of support media and housing an air diffuser, whereby in use liquid effluent is contained in the column and surrounds microbial biomass on the support matrix, and air is diffused through the effluent by the air diffuser.

The column may be closed at its lower end, or open, depending on how the biological aerated filter is to be used.

The column will generally have an inlet at its lower end for compressed air supply to the air diffuser. It would also preferably have an effluent inlet at its lower end and an effluent outlet at its upper end.

The air diffuser preferably occupies a substantial proportion of the area of transverse cross-section of the column. Generally, the column is cylindrical and the air diffuser is circular. In this case, the diameter of the active area of the diffuser is preferably at least half of the diameter of the column, more preferably at least three quarters of the diameter, and most preferable at least 90% of the diameter of the column. The active area of the air diffuser is generally constituted by a multi-perforated flexible membrane. When compressed air enters into the diffuser, the membrane partly inflates and air passes through the multiple perforations as streams of small bubbles. By matching as far as possible the active area of the diffuser to the base area of the solid matrix in the column, the invention achieves as far as possible complete and thorough aeration of the solid matrix. This ensures that the microorganisms are maintained in the aerobic state. If insufficient air reaches the microorganisms, then anaerobic colonies may grow and this would have an undesirable effect on the quality of the outflowing effluent. The present invention therefore helps to achieve the desired preponderance of aerobic microorganisms.

The invention also provides a biological aerated filter in the form of a packing in an upright tube, the air diffuser being positioned at the bottom of the tube. The tube is open at the top and the bottom to permit flow of effluent through the solid matrix, the flow being entrained by the stream of air bubbles from the air diffuser. A plurality of biological aerated filter tubes can be used together, and each can operate independently, or alternatively effluent outflow from one can be directed into another. In a preferred embodiment, an air supply pipe acts to supply air to a plurality of air diffusers, above each of which a biological aerated filter tube is positioned, the filter tubes simultaneously being supported by the air supply pipe.

In a particularly preferred embodiment, a structure such as the above is fitted inside a tank (which may be part of an existing sewage treatment plant), and the air supply pipe passes around the internal periphery of the tank with a plurality of air diffusers and respective biological aeration filter tubes being mounted on the air supply pipe. The filter tubes thus fit over the diffusers and rest on the air supply pipe close to the vertical wall of the tank, and can be held in position by means of pipe clamps. They can thus be easily removed for routine maintenance or servicing.

Reference is now made to the accompanying drawings in which:
Figure 1 is a plan view of a biological aerated filter column according to an embodiment of the invention;
Figure 2 is a vertical section on the line X-X of Figure 1;
Figure 3 is a vertical section in diagrammatic form of a biological aerated filter tube according to another embodiment of the invention;
Figure 4 is a plan view of a sewage treatment tank having biological aerated filter tubes according to Figure 3 installed therein; and
Figure 5 is a vertical section on the line X-X of Figure 4.

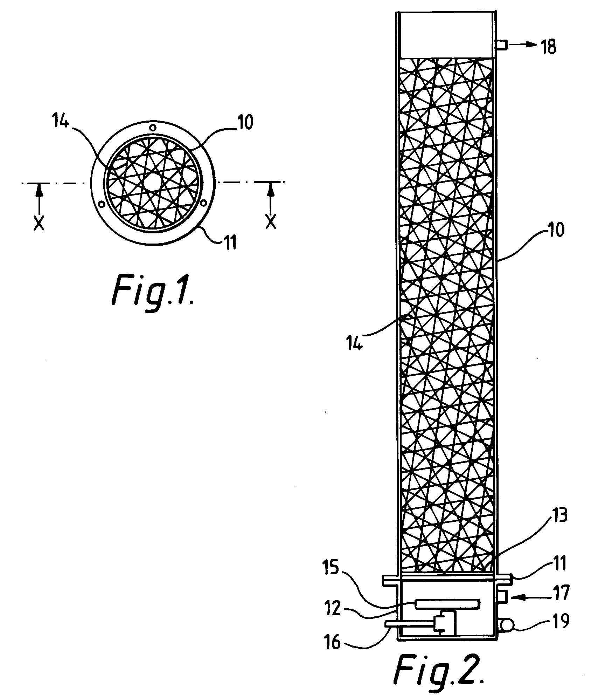

The column of Figures 1 and 2 is in the form of an upright cylinder. For ease of maintenance, a tubular upper part 10 is detachably fixed by bolted flanges 11 to a closed-end lower part or "bucket" 12. At about the level of the flanges, an internal grid 13 acts as a lower support for a solid matrix 14, which internally packs most of the length of the tube portion. The solid matrix may be that marketed under the trade mark BIODEK, which consists of adjoining sheets of corrugated rigid PVC. Alternatively, it may consist of random filter media as supplied by Messrs Mass Transfer International and Flocor Limited.

The bucket 12 forms a chamber beneath the grid 13. An air diffuser 15 is positioned in this chamber. A suitable air diffuser is a disc diffuser marketed under the trade mark DIDIER. The air diffuser 15 is supplied with air under pressure and this bubbles up through the liquid effluent surrounding the solid matrix. The diameter of the effective diffusant surface is about 70% of the internal diameter of the column. An air supply line 16 for the diffuser passes through the side wall of the bucket.

The side wall of the bucket is also provided with an inlet 17 (or outlet) for liquid effluent. There is a corresponding outlet 18 (or inlet) for effluent in the side of the tube portion near the top of the column. A draw off valve 19 is provided at the bottom of the bucket 12.

Such columns can be used singly or in groups, depending on the effluent to be treated. They can be used in different ways in conjunction with conventional sewage works, or on their own as a free standing and portable effluent treatment apparatus (with suitable screening means).

Colonies of microorganisms form as biomass on the solid media and break down noxious elements in the effluent with the assistance of the air supplied from the air diffusers. Effluent generally enters from an inlet and passes through the media compartment. Liquid effluent passes from the bottom to the top, and then as an overflow into a subsequent column or to discharge. An air diffuser is arranged at the bottom of each column and receives air under pressure from an adjoining blower compartment, the air escaping as a stream of upward bubbles through each column. However, it is also possible to use an installation which includes one or more such columns, without an aerator, such additional columns then constituting settlement means.

The biological aerated filter column may be a permanent fixture, or alternatively it can be provided as a moveable modular unit which can be quickly erected on site and used, for example, for emergency response to pollution incidents. In this latter case, the biological treatment can be started within a few hours, which is not possible with currently available apparatus. There are no moving parts within the columns, and additional modules can be fitted as required or removed when not required, eg to take into account seasonal variations in load.

The biological aerated filter columns can be installed in trailers or skid-mounted tanks to provide rapid upgrading of sewage works, or to provide emergency capacity. The columns can be used to treat screened crude sewage, settled sewage, top liquors, leachate, silage effluent, effluent from slurry tanks, or humus effluent to effect nitrification.

The invention involves a number of advantages. The rate of air diffusion via the membrane diffuser can be matched to the volume of the support matrix so that the process air produces sufficient velocity to achieve scouring of surplus biomass without wasting air. Recirculation within the system is possible by varying the air flow and influent air rates. Tall columns enhance oxygen transfer and increase biological oxygen demand (BOD) reduction rates, thus reducing operating costs. The columns can be provided in variable lengths to suit site conditions. The columns can be installed in series or parallel. The columns can be surface mounted, installed in existing void structures or sunk into the ground. Maintenance is simplified, as the columns can be lifted out of deep shafts or tanks, obviating the need for breathing apparatus. Surface mounted units can be suspended or laid on their sides to service the air diffusers. The use of commercially available tubes (for example of PVC or glass reinforced plastic) for the containment of the biological support media reduces the cost of the housing.

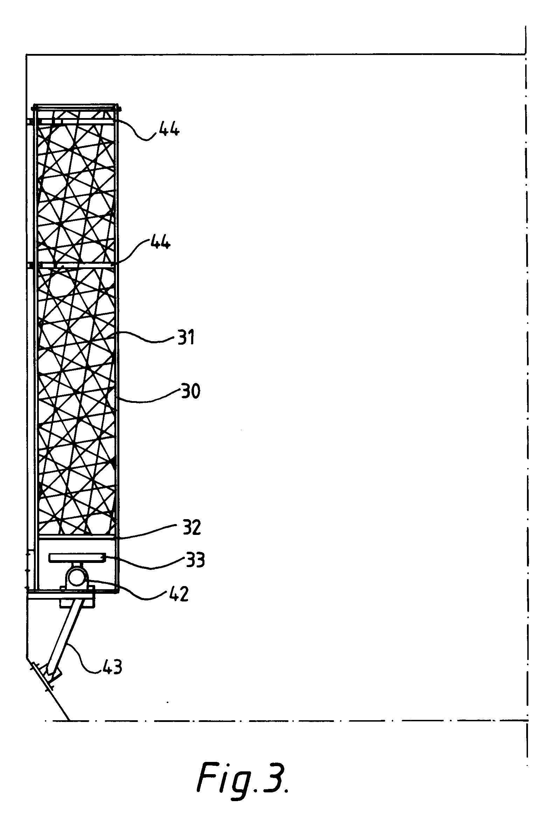

The biological aerated filter tube of Figure 3 is an upright, open-ended tube 30 generally made of plastics material. An internal packing of support matrix 31 for aerobic microorganisms is supported on a grid 32 near the bottom of the tube. An air diffuser 33, for example a membrane-type air diffuser, is positioned in the tube at the lower end. In use, the tube is submerged in effluent, and an upward stream of air bubbles from the air diffuser passes over and through the solid matrix, and entrains a flow of effluent. The biochemical oxygen demand of the effluent is thus reduced by the action of colonies of aerobic bacteria which form a biomass on the support matrix. The air flow is such as to scour excess biomass from the solid matrix, preventing sludging up of the matrix and containing vessel.

In order to ensure adequate aeration of the solid matrix, the effective area of the diffuser should form a substantial proportion of the cross sectional area of the filter tube. In the case of a membrane-type diffuser, a flexible multi-perforated membrane forms the effective area, this membrane being partly inflated by the air supply and the air escaping as a stream of bubbles through the multiple perforations. In the case of a cylindrical tube and a circular air diffuser, the effective diameter of the air diffuser should be at least half the diameter of the tube, preferable at least three quarters, and most preferably at least 90%.

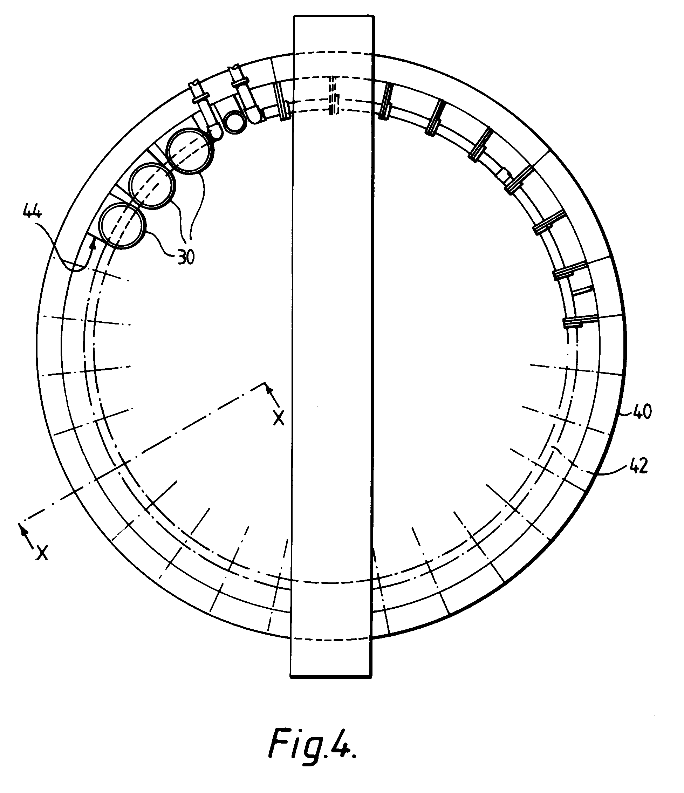

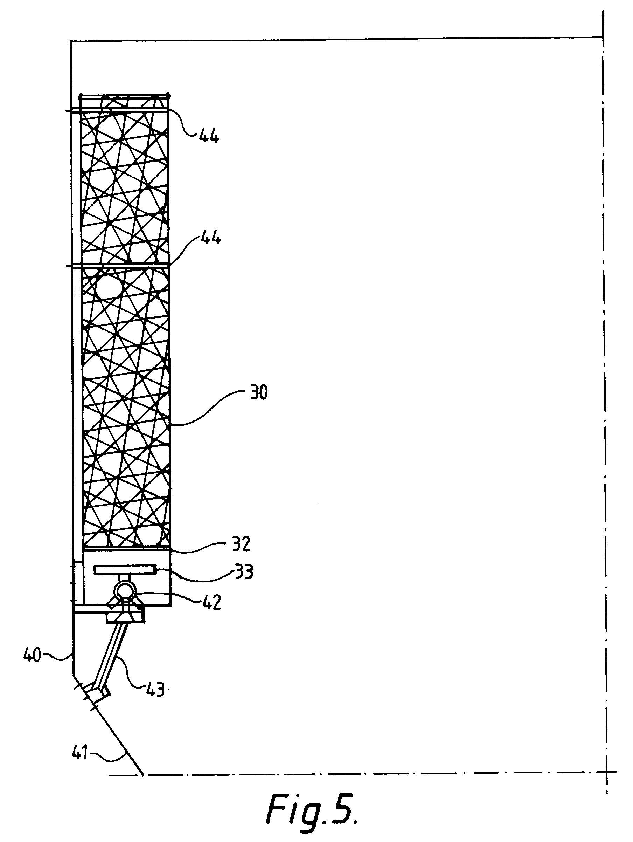

Figures 4 and 5 show a deep tank 40 with a conical lower portion 41 (for collection of sludge, which can be periodically released), this tank forming part of an existing sewage treatment plant. An air supply pipe is provided in the form of a ring main 42, which passes around the internal periphery of the tank and has a plurality of sockets for the attachment of air diffusers. An upright biological aerated filter tube 30 is positioned above each air diffuser, the lower end of each tube being shaped to rest and be supported by the ring main with additional support from beneath by a bracket 43. A clamp or bracket 44 is provided at a higher level to hold each tube in position against the vertical wall of the tank. Each tube can thus be easily removed for routine maintenance or servicing.

In order to cope with periodical increases in load on the sewage plant, such an adapted tank can be used to provide for relatively rapid reduction of biological oxygen demand of effluent. Such effluent is passed into the tank, where the biological aerated filters operate for sufficiently long to effect the desired improvement in effluent quality. The capacity of the tank can be readily adjusted by adding or removing filter tubes as required.

## Claims

**1** A biological aerated filter comprising an upstanding hollow column (10), the column being packed with support media (14) for microbial biomass, and a portion of the interior of the column at the lower end (12) being free of support media and housing an air diffuser (15), whereby in use liquid effluent is contained in the column and surrounds microbial biomass on the support matrix, and air is diffused through the effluent by the air diffuser.

**2** A biological aerated filter according to Claim 1, in which the column has an effluent inlet or outlet (17) at its lower end and an effluent outlet or inlet (18) at its upper end.

**3** A biological aerated filter according to Claim 1 or 2, in which the column is cylindrical and the air diffuser is circular, the diameter of the active area of the diffuser being at least half of the diameter of the column.

**4** A biological aerated filter according to any of Claims 1 to 3, in which the active area of the air diffuser is generally constituted by a multi-perforated flexible membrane.

**5** A biological aerated filter according to Claim 1, in the form of a packing (31) in an upright tube (30), the air diffuser (33) being positioned at the bottom of the tube, and the tube being open at the top and the bottom to permit flow of effluent through the solid matrix, the flow being entrained by the stream of air bubbles from the air diffuser.

**6** A liquid-waste treatment installation, comprising a plurality of biological aerated filters according to Claim 5 fitted inside a tank (40,41) and an air supply pipe (42) passing around the internal periphery of the tank with the air diffusers (33) and respective biological aeration filter tubes (30) being mounted on the air supply pipe.
